# EUROPEAN PATENT APPLICATION

(11) **EP 0 874 021 A1**
(43) Date of publication of application: **28.10.1998**
(21) Application number: 98401004.1
(22) Date of filing: 24.04.1998
(51) Int. Cl.: C08K 5/3475, C08L 21/00

(54) **Method and composition for inhibiting mold fouling**

(30) Priority: 25.04.1997 US 847479
(71) Applicant: Zeon Chemicals Incorporated, Louisville, Kentucky 40211 (US)
(72) Inventor: Umetsu, Kiyonori, Louisville, Kentucky 40233-7620 (US); Hayashi, Sachio, c/o Nippon Zeon Co., Ltd, Kawasaki-shi, Kanagawa-ken, 210 (JP)
(74) Representative: Portal, Gérard

(57) **Abstract**

The invention relates to a method for inhibiting the fouling of molds and to compositions used in practicing that method.

Said method comprises adding at least 0.3 parts of the formula 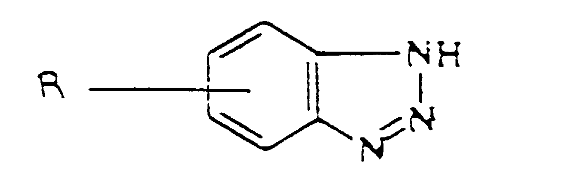 wherein R is hydrogen or lower alkyl or a salt thereof, per 100 parts of the elastomer to be cured, present in a composition prior to curing the elastomer in a mold, thereby inhibiting fouling of the mold.

## Description

The present invention relates to a method for inhibiting the fouling of molds in which elastomers are being molded and to compositions used in practicing that method.

### Background of the Invention

While originally used to describe the process of heating rubber with sulfur, vulcanization is now used to mean any process used to cure elastomers and produce useful elastomeric products. Molding is the most widely used method to vulcanize or cure elastomers when preparing shaped articles.

In compression molding, the oldest method for making molded articles, the uncured or vulcanizable elastomer is placed in the cavity of the mold, and the mold is closed under pressure. The elastomer conforms to the shape of the cavity and is cured by heating.

In transfer molding, the elastomer is placed in a vessel fitted with a ram or piston. When pressure is applied, the heated elastomer softens and flows into cavities in the mold where it is cured.

Injection molding is similar to transfer molding except that the elastomer is injected, using a ram, a screw, or a ram and a reciprocating screw, directly into the cavities of the mold. When a ram is used, the elastomer is held in a cylinder and is thermally softened prior to injection, and when a screw is used, the screw masticates the heated elastomer further reducing its viscosity. When using a reciprocating screw, the elastomer is supplied to the front of the screw forcing the screw to reciprocate rearward. The screw is then stopped and forced to reciprocate forward forcing the elastomer into the moid. The screw again rotates preheating elastomer for the next shot. The mold is opened. the molded part removed and the mold closed to receive the next shot.

In order to make injection molding profitable, very short cycle times between shots are required. The molded parts should cure quickly and be readily removable from the mold to keep heat loss and cycle time to a minimum. Currently, curing temperatures of about 170°C and above, and generally in the range of 170-220°C, and preferably 190-200°, are utilized.

Mold fouling is a complicated and poorly understood process. It is attributed to the interaction of several factors including the elastomer being cured. the curing system utilized. the time and temperature of curing, and. of cause, the nature of the interior surfaces of the mold.

Since the molds must be capable of withstanding pressures of 600-10,000 psi with a minimum of distortion, they are generally made of steel of other metal. As will be explained in more detail below, curing at high temperatures makes mold fouling a serious problem. particularly when sulfur-vulcanized elastomeric parts are made by injection molding.

Stated simply, mold fouling is caused by components of the elastomer composition being molded, such as soaps formed by the reaction of zinc oxide and stearic acid, which have a tendency to migrate to and adhere to interior surfaces of a mold. Those surfaces contain metal oxides, or metal hydroxides formed by the reaction of the oxides with moisture, which are reactive with various components of the elastomer composition being vulcanized. The materials adhering to or reacted with the mold are further heat-decomposed in subsequent molding cycles and also tend to adhere to and deteriorate the quality of the articles being molded.

It is apparent that mold fouling is a serious problem. First, production must be stopped, the fouled molds removed from the molding apparatus and cleaned. and the cleaned molds replaced and reset in the molding apparatus. Second, the molded articles produced just prior to cleaning of the molds may have blemishes and be of diminished commercial value.

In the past, attempts have been made to minimize mold fouling by coating the interior surfaces of a mold with lubricants, such as silicone oils, parting agents, such as phosphate esters, or the like. A more recent approach, as described in JP 55-108429, is to add certain quinoline compounds to the elastomer-containing composition being vulcanized.

### Brief Description of the Present Invention

The present invention is based on the discovery that the addition of certain benzotriazoles to the elastomer composition being molded, particularly when the composition is being injection molded, inhibits fouling of the mold.

In its method aspect, the present invention is a method for inhibiting fouling of a mold by a composition in which an elastomer is being cured, which comprises adding at least about 0.3 parts of a benzotriazole of the formula 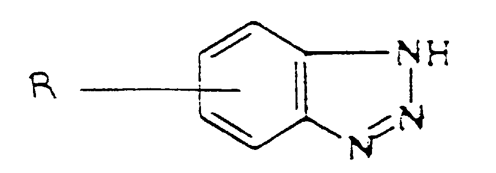 wherein R is hydrogen or lower alkyl, or a salt thereof, per 100 parts of the elastomer in the composition, prior to curing the elastomer in the mold.

In its composition aspect, the present invention is a composition comprising a curable elastomer, a curing system for the elastomer, and at least 0.3 parts of a benzotriazole of the formula 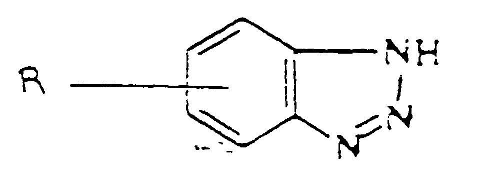 wherein R is hydrogen or lower alkyl, or a salt thereof, per 100 parts of the elastomer.

### Detailed Description of the Invention

The method of the present invention is applicable when elastomers are being cured or molded, particularly by injection molding. Illustrative, non-limiting examples of elastomers to which this invention may be applied are nitrile rubbers, hydrogenated nitrile rubbers, ethylenepropylene rubbers, copolymers of vinyl acetate and ethylene terpolymers of ethylene, propylene and a non-conjugated diene, natural rubbers, polybutadiene, polyisobutylene, butyl rubber, halogenated butyl rubber, copolymers of butadiene with one or more polymerizable ethylenically unsaturated monomers, such as styrene, acrylonitrile, methyl methacrylate, polyacrylates, polyethers and polymers of substituted butadienes, such as chlorobutadiene and isoprene.

The present invention is particularly applicable when nitrile rubbers or hydrogenated nitrile rubbers are being injection molded. As is well known to those skilled in the art, nitrile rubbers are copolymers of acrylonitrile and a diene, such as butadiene, and generally contain about 20-50 parts by weight of acrylonitrile. Hydrogenated nitrile rubbers are partially hydrogenated nitrile rubbers having a degree of unsaturation of from about 0.1 to about 20%.

The elastomer is cured in a composition containing the elastomer and appropriate vulcanization agents, such as sulfur and sulfur donors. The curing system may contain activators such as zinc oxide and stearic acid; and accelerators which reduce the time required for sulfur cure, such as thiazoles. sulfenamides, thioureas, guanidines, dithiocarbamates thiuram disulfides; and fillers. such as carbon black.

Elastomers can also be vulcanized or cured in a curing system containing an organic peroxide, such as dibenzoyl peroxide, dicumyl peroxide and 1,1-bis(t-butylperoxy)-3,3,5-trimethylcyclohexane, to cross-link polymer chains in the elastomer. The peroxide decomposes to form free radicals which abstract hydrogen from the polymer chains producing alkyl-type radicals which couple forming stable carbon-carbon bonds. As is well known to those skilled in the art, the curing system may also contain among others, an amine derived antioxidant. a phenylene/hnfleimide, a metal oxide, carbon black and/or a plasticizer.

The compositions of the present invention contain at least 0.3 parts, and preferably 0.5-2.0 parts, of the benzotriazole per 100 parts of the elastomer being cured. Amounts in excess of 2 parts per 100 parts of benzotriazole are operative but no additional benefit is obtained when using such higher amounts of the benzotriazole. As indicated earlier, the benzotriazole is a triazole of the formula 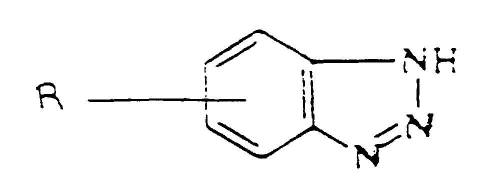 wherein R is hydrogen or lower alkyl, or a salt thereof. By lower alkyl is meant a branched or unbranched C₁₋₄ alkyl group, such as methyl, ethyl, propyl, isopropyl, butyl and isobutyl. Benzotriazoles where R is hydrogen or methyl, and where the salt is an alkali metal salt such as sodium or potassium are particularly preferred.

The composition of the present invention may also contain 0.1 to 0.5 parts per 100 parts of the elastomer of a hydroxyquinoline of the type disclosed in JP 55-10842 (incorporated herein by reference). Preferred hydroxyquinolines for this purpose are hydroxyquinoline and 8-hydroxyquinaldine.

When practicing the method of the present invention, the benzotriazole, and the hydroxyquinoline when utilized, may be added to the composition at any time before the composition is supplied to the mold.

Our invention is further illustrated by means of the following non-limiting examples. In these examples, a masterbatch of the elastomer is prepared in the customary manner and admixed with the curing system using conventional equipment, such as blenders, mixers, extruders or the like. The components of the curable compositions, the times and temperatures of curing, processing properties during curing and the properties of the cured product, including the results of standard art-recognized tests on aged products, are summarized below. The degree of mold fouling is determined mainly by visual inspection and is reported on a scale of 0-5, where 0 represents a clean or un-fouled mold and 5 represents a dirty or extremely fouled mold.

### Example 1

The elastomer in this example is a nitrile rubber containing 33% by weight of acrylonitrile.

| | a | b |
|---|---|---|
| Elastomer | 100 | 100 |
| Carbon Black | 60 | 60 |
| Zinc Oxide + | 5 | 5 |
| Di-ethylhexyl Phthalate | 5 | 5 |
| Stearic Acid | 1 | 1 |
| Spider Sulfur | 0.5 | 0.5 |
| Thiocarbmyl Sulfenamide | 1.5 | 1.5 |
| Tetraethyl Thiuram Disulfide | 1.5 | 1.5 |
| Benzotriazole | | 0.5 |
| Compound Mooney Viscosity, 100°CML ML1+4 | 63 | 60 |
| | | |
| Mooney Scorch 125°CML | | |
| Vm | 40 | 37 |
| t5,min | 9.0 | 10.6 |
| t35,min | 12.9 | 12.7 |
| | | |
| Oscillating Disk Rheometer, @ 160°C | | |
| Ts2,min | 2.1 | 2.0 |
| T90,min | 5.7 | 4.9 |
| ML, dNm | 12 | 11 |
| MH, dNm | 96 | 86 |
| | | |
| Oscillaring Disk Rheometer, @ 190°C | | |
| Ts2,min | 0.9 | 0.8 |
| T90,min | 1.9 | 1.7 |
| ML, dNm | 11 | 10 |
| MH, dNm | 81 | 71 |
| | | |
| Originals, 20min @ 160°C | | |
| Tensile, MPa | 18.3 | 18.7 |
| Elongation, % | 370 | 420 |
| 100% Modulus, MPa | 3.2 | 3.2 |
| 200% Modulus, MPa | 8.9 | 8.1 |
| 300% Modulus, MPa | 15.3 | 14 |
| Hardness, Shore A | 65 | 65 |
| | | |
| Aged in Air, 70hours @ 120°C | | |
| Tesile, MPa | 17.3 | 17.7 |
| Elongation, % | 240 | 270 |
| 100% Modulus, MPa | 5.1 | 5 |
| Hardness, Shore A | 69 | 67 |
| Tensile Change, % | -5 | -5 |
| Elongation Change, % | -35 | -36 |
| 100% Modulus Change, % | 59 | 56 |
| Hardness Change, pts | 4 | 2 |
| | | |
| Mold Fouling, 2min @ 190°C, 5MPa | 0.5 | 0.5 |
| 10shots | 1.5 | 0.5 |
| 20shots | 2 | 0.5 |
| 30shots | 3.5 | 0.5 |
| 40shots | 4 | 0.5 |
| 50shots | | |

### Example 2

The elastomer in this example is a nitrile rubber containing 33% by weight of acrylonitrile and illustrates the comparable results obtained using benzotriazole and tolyltriazole as the benzotriazole.

| | a | b | c | d |
|---|---|---|---|---|
| Elastomer | 100 | 100 | 100 | 100 |
| Stearic Acid | 1 | 1 | 1 | 1 |
| Carbon Black | 60 | 60 | 60 | 60 |
| Zinc Oxide | 5 | 5 | 5 | 5 |
| Di-2-ethylhexyl Phthalate | 5 | 5 | 5 | 5 |
| Spider Sulfur | 0.5 | 0.5 | 0.5 | 0.5 |
| Thiocarbamyl Sulfenamide | 1.5 | 1.5 | 1.5 | 1.5 |
| Tetraethyl Thinsram Disulfide | 1.5 | 1.5 | 1.5 | 1.5 |
| Benzotriazole | - | 0.5 | - | - |
| Tolytriazole | - | - | - | 0.5 |
| Compound Mooney Viscosity, 100°CML ML1-4 | 50 | 47 | 50 | 49 |
| | | | | |
| Mooney Scorch, 125°CML | 31 | 29 | 31 | 31 |
| Vmin | 9.6 | 10.5 | 11.3 | 9.3 |
| t5,min | 12.9 | 13.2 | 14.3 | 11.4 |
| t35,min | | | | |
| | | | | |
| Oscillating Disk Rheometer, 10min @ 190°C | 9 | 8 | 8 | 9 |
| ML, dNm | 65 | 62 | 64 | 69 |
| MH, dNm | 1.0 | 1.0 | 1.1 | 0.9 |
| Ts2,min | 1.9 | 1.9 | 2.0 | 2.0 |
| T90,mm | | | | |
| | | | | |
| Originals, cured 20min @ 160°C | | | | |
| Tensile, MPa | 17.3 | 17.3 | 17.4 | 17.7 |
| Elongation, % | 430 | 480 | 500 | 490 |
| 100% Modulus, MPa | 2.5 | 2.5 | 2.3 | 2.5 |
| 200% Modulus, MPa | 6.7 | 6.3 | 5.5 | 6.0 |
| 300% Modulus MPa | 12.5 | 11.4 | 10.3 | 10.9 |
| Hardness, Shore A | 65 | 65 | 62 | 61 |
| Tear. Die C. KN/M | | | | |
| | | | | |
| Compression Set, cured 30min @ 160°C | 15 | 18 | 22 | 20 |
| 70hours @ 120°C | | | | |
| | | | | |
| Mold Fouling, curred 2min @ 203°C | | | | |
| 10shots | 3 | 0.5 | | |
| 20shots | 4 | 0.5 | | |
| 30shots | 5 | 3 | | |
| 40shots | 5 | 4 | | |
| 50shots | 5 | 4 | | |
| | | | | |
| Mold Fouling, cured 2min @ 190°C | | | | |
| 10shots | 1 | 0 | 1 | 0 |
| 20shots | 3 | 0.5 | 3 | 0 |
| 30shots | 3 | 0.5 | 4 | 1 |
| 40shots | 4 | 1 | 4 | 2 |
| 50shots | 4 | 3 | 4 | 3 |

Examples a and c are controls.

### Example 3

This example illustrates the results obtained using varying amounts of the benzotriazole when a nitrile rubber containing 28% by weight of acrylonitrile is vulcanized.

| | a | b | c | d | e | f |
|---|---|---|---|---|---|---|
| Elastomer | 100 | 100 | 100 | 100 | 100 | 100 |
| Stearic Acid | 1 | 1 | 1 | - | - | - |
| Carbon Black | 60 | 60 | 60 | - | - | - |
| Zinc Oxide | 5 | 5 | 5 | 1 | 1 | 1 |
| Di-2-ethylhexyl Phthalate | 5 | 5 | 5 | 60 | 60 | 60 |
| Spider Sulfur | 0.5 | 0.5 | 0.5 | 5 | 5 | 5 |
| Thiocarbamyl Sulfenamide | 1.5 | 1.5 | 1.5 | 5 | 5 | 5 |
| Tetraethyl Thinstram Disulfide | 1.5 | 1.5 | 1.5 | 0.5 | 0.5 | 0.5 |
| Benzotriazole | - | 0.8 | | 0.5 | 1.0 | 1.5 |
| Compound Mooney Viscosity, 100°CL 100°CML | | | | | | |
| | | | | | | |
| Mooney Scorch, 125°CML | 56 | 60 | 46 | 45 | 45 | 44 |
| t5,min | 3.7 | 9.9 | 9.3 | 10.8 | 11.4 | 13.2 |
| t5,min | 12.6 | 12.1 | 14.4 | 14.0 | 13.3 | 15.6 |
| Vmin | 39 | 36 | 29 | 28 | 28 | 28 |
| | | | | | | |
| Oscilating Disk Rheometer, 10min, 3°are @ 200°C | | | | | | |
| Ts2,min | 0.8 | 0.8 | 7 | 7 | 7 | 7 |
| T90,min | 1.7 | 1.5 | 67 | 63 | 58 | 52 |
| ML,dNm | 10 | 9 | 0.8 | 0.8 | 0.8 | 0.9 |
| MH,dNm | 75 | 65 | 1.6 | 1.6 | 1.5 | 1.5 |
| | | | | | | |
| Originals, cured 20min @ 160°C | | | | | | |
| Tensile, MPa | 19.3 | 19.2 | 17.9 | 18.6 | 19.1 | 18.6 |
| Elongation, % | 400 | 440 | 390 | 440 | 480 | 510 |
| 100% Modulus, MPa | 3.4 | 3.0 | 3.1 | 2.9 | 2.7 | 2.5 |
| 200% Modulus, MPa | 9.1 | 7.7 | 8.0 | 7.3 | 6.8 | 6.3 |
| 300% Modulus, MPa | 15.4 | 13.7 | 14.0 | 13.2 | 12.4 | 11.5 |
| Hardness, Shore A | 69 | 68 | 67 | 66 | 65 | 64 |
| | | | | | | |
| Compression Set, cured 30min @ 160°C | | | | | | |
| 70hours @ 120°C,% | 16 | 21 | 16 | 18 | 21 | 25 |
| | | | | | | |
| Aged in Air, 70hours @ 120°C | | | | | | |
| Tensile, MPa | 19.4 | 20.6 | 17.8 | 17.4 | 16.2 | 19.2 |
| Elongation, % | 250 | 270 | 240 | 250 | 230 | 240 |
| 100% Modulus, MPa | 5.7 | 5.3 | 5.6 | 4.8 | 5.2 | 4.1 |
| Hardness, Shore A | 75 | 74 | 74 | 73 | 73 | 71 |
| Tensile Change, % | 1 | 7 | -1 | -6 | -15 | 3 |
| Elongation Change, % | -38 | -39 | -38 | -43 | -52 | -33 |
| 100% Modulus Change, % | 68 | 77 | 81 | 66 | 93 | 64 |
| Hardness Change, pts | 6 | 6 | 7 | 7 | 8 | 7 |
| | | | | | | |
| Mold Fonling, cured 2mm @ 190°C (actual 203°C) | | | | | | |
| 10shots | 2 | 0 | 3 | 0.5 | 0.5 | 0.5 |
| 20shots | 2 | 0 | 3 | 1 | 0.5 | 0.5 |
| 30shots | 4 | 0 | 4 | 3 | 0.5 | 0.5 |
| 40shots | 5 | 0 | | | | |
| 50shots | 5 | 0 | | | | |

Examples a and c are controls.

### Example 4

This example illustrates the results obtained using varying amounts of the benzotriazole when a nitrile rubber containing 33% by weight of acrylonitrile was vulcanized.

| | a | b | c | d | e | f |
|---|---|---|---|---|---|---|
| Elastomer | 100 | 100 | 100 | 100 | 100 | 100 |
| Stearic Acid | 1 | 1 | 1 | 1 | 1 | 1 |
| Carbon Black | 60 | 60 | 60 | 60 | 60 | 60 |
| Zinc Oxide | 5 | 5 | 5 | 5 | 5 | 5 |
| Di-2-ethythexyl Phthalate | 5 | 5 | 5 | 5 | 5 | 5 |
| Spider Sulfur | 0.5 | 0.5 | 0.5 | 0.5 | 0.5 | 0.5 |
| Thiocarbamyl Sulfenamide | 1.5 | 1.5 | 1.5 | 1.5 | 1.5 | 1.5 |
| Tetraethyl Thiuram Disulfide | 1.5 | 1.5 | 1.5 | 1.5 | 1.5 | 1.5 |
| Benzotriazole | - | 0.3 | 0.5 | 0.8 | 1 | 2 |
| Mold Fouling, cured 2min @ 203°C | | | | | | |
| | | | | | | |
| 10shots | 0.5 | 0 | 0 | 0.5 | 0.5 | 0.5 |
| 20shots | 2 | 1 | 0.5 | 0.5 | 0.5 | 0.5 |
| 30shots | 3 | 3 | 1 | 0.5 | 0.5 | 1 |
| 40shots | 4 | 4 | 3 | 0.5 | 0.5 | 1 |
| 50shots | 4 | 4 | 4 | 0.5 | 0.5 | 0.5 |

### Example 5

In this example. the elastomer contains 33% by weight of acrylonitrile and illustrates that similar results are obtained when using a salt of a benzotriazole in place of the benzotriazole.

| | a | b | c |
|---|---|---|---|
| Elastomer | 100 | 100 | 100 |
| Stearic Acid | 1 | 1 | 1 |
| Carbon Black | 60 | 60 | 60 |
| Zinc Oxide | 5 | 5 | 5 |
| Di-2-ethylhexyl Phthalate | 5 | 5 | 5 |
| Spider Sulfur | 0.5 | 0.5 | 0.5 |
| Thiocarbamyl Sulferamide | 1.5 | 1.5 | 1.5 |
| Tetraethyl Thrisram Disulfide | | 1.5 | 1.5 |
| Tolytriazzole | | 0.5 | |
| Potasnium Tolytrazone | | | 0.5 |
| Compound Mooney Viscosity, 100°CML ML1-4 | 60 | 58 | 61 |
| | | | |
| Mooney Scortch, 125°CML | | | |
| Vmin | 38 | 37 | 41 |
| t5,min | 8.7 | 9.9 | 7.6 |
| t35,min | 13.1 | 11.3 | 9.8 |
| | | | |
| Oscillating Disk Rheometer, 3°are 10min @ 190°C | | | |
| ML, dNm | 11 | 10 | 11 |
| MH,dNm | 81 | 72 | 89 |
| Ts2,min | 0.9 | 0.8 | 0.8 |
| T90,min | 2.0 | 1.8 | 1.9 |
| | | | |
| Originals, cured 20min @ 160°C | | | |
| Tensule, MPa | 18.4 | 15.9 | 16.9 |
| Elongation % | 400 | 400 | 390 |
| 100% Modulus, MPa | 3.2 | 2.7 | 3.2 |
| 200% Modulus, MPa | 8.6 | 6.7 | 8.2 |
| 300% Modulus, MPa | 14.7 | 12.2 | 13.8 |
| Hardness, Shore A | 65 | 64 | 65 |
| | | | |
| Agred in Air, 70hours @ 120°C | | | |
| Tensile MPa | 15.1 | 16.3 | 9.3 |
| Elongation, % | 200 | 230 | 220 |
| 100% Modulus, MPa | 5.4 | 4.9 | 5.6 |
| Hardness, Shore A | 74 | 75 | 73 |
| Tensile Change, % | -18 | 3 | -45 |
| Elongation Change, % | -50 | -43 | -44 |
| 100% Modulus Change, % | 69 | 81 | 75 |
| Hardness Change, pts | 9 | 11 | 8 |
| | | | |
| Compression Set, cured 30min @ 160°C | | | |
| 70hours @ 120°C,% | 16 | 22 | 21 |
| | | | |
| Mold Fouiling, cured 2min @ 190 | | | |
| 10shots | 0.5 | 0 | 0 |
| 20shots | 1 | 0 | 0 |
| 30shots | 3 | 0 | 0 |
| 40shots | 4 | 0 | 0 |
| 50shots | 4 | 0 | 0 |

### Example 6

In this example, the elastomer contains 28% by weight of acrylonitrile, and illustrates the results obtained when 8-hydroxyquinaldine is used in combination with the benzotriazole.

| | a | b | c | d | e | f | g | h | i |
|---|---|---|---|---|---|---|---|---|---|
| Elastomer | 100 | 100 | 100 | 100 | 100 | 100 | 100 | 100 | 100 |
| Stearic Acid | 1 | 1 | 1 | 1 | 1 | 1 | 1 | 1 | 1 |
| Carbon Black | 60 | 60 | 60 | 60 | 60 | 60 | 60 | 60 | 60 |
| Zin Oxide | 5 | 5 | 5 | 5 | 5 | 5 | 5 | 5 | 5 |
| Di-2-ethylhexyl Phthalate | 5 | 5 | 5 | 5 | 5 | 5 | 5 | 5 | 5 |
| Spider Sulfur | 0.5 | 0.5 | 0.5 | 0.5 | 0.5 | 0.5 | 0.5 | 0.5 | 0.5 |
| Thiocarbamyl Sulfenamide | 1.5 | 1.5 | 1.5 | 1.5 | 1.5 | 1.5 | 1.5 | 1.5 | 1.5 |
| Tetraethyl Thirsram Disulfide | 1.5 | 1.5 | 1.5 | 1.5 | 1.5 | 1.5 | 1.5 | 1.5 | 1.5 |
| 8-Hydroxyquinaldine | - | 0.5 | - | 0.4 | 0.25 | 0.1 | - | - | - |
| Benzotriazole | - | - | 0.5 | 0.1 | 0.25 | 0.4 | - | 0.5 | 0.5 |
| Calcium Stearate | - | - | - | - | - | - | 1 | 1 | - |
| N-Butylbenzenesulfonamide | - | - | - | - | - | - | - | - | 1 |
| | | | | | | | | | |
| Compound Mooney Viscosity, 100°CML 100°CML | 47 | 42 | 46 | 47 | 45 | 45 | 46 | 48 | 44 |
| | | | | | | | | | |
| Mooney Scorch 125°CML | 9.7 | 8.2 | 10.2 | 8.5 | 9.2 | 9.5 | 8.5 | 10.7 | 10.4 |
| t5,min | 14.2 | 12.1 | 12.3 | 12.1 | 11.8 | 11.6 | 12.6 | 12.9 | 12.5 |
| t35,min | 32 | 31 | 31 | 33 | 30 | 30 | 31 | 31 | 29 |
| Vmin | | | | | | | | | |
| | | | | | | | | | |
| Oscillating Disk Rheometer, 10min, 3°are @ 200°C | 0.8 | 0.8 | 0.8 | 0.8 | 0.8 | 0.8 | 0.8 | 0.8 | 0.8 |
| Ts2,min | 1.7 | 1.6 | 1.5 | 1.6 | 1.6 | 1.5 | 1.7 | 1.5 | 1.5 |
| T90,min | 8 | 8 | 8 | 9 | 8 | 7 | 8 | 8 | 7 |
| ML, dNm | 74 | 72 | 65 | 75 | 70 | 66 | 71 | 64 | 63 |
| MH,dNm | | | | | | | | | |
| | | | | | | | | | |
| Originals, cured 20min @ 160°C | 18.1 | 17.3 | 18.7 | 18.5 | 18.6 | 18.3 | 18.1 | 18.7 | 18.4 |
| Tensile, MPa | 430 | 430 | 480 | 450 | 460 | 470 | 430 | 490 | 470 |
| Elongation, % | 2.8 | 3.1 | 2.7 | 3.2 | 2.9 | 2.8 | 2.9 | 2.7 | 2.6 |
| 100% Modulus, MPa | 7.4 | 7.9 | 6.9 | 8.4 | 7.4 | 7.2 | 7.4 | 6.9 | 6.6 |
| 200% Modulus, MPa | 13.1 | 13.3 | 12.3 | 13.8 | 12.3 | 12.4 | 13.0 | 12.1 | 12.0 |
| 300% Modulus, MPa | 66 | 67 | 66 | 67 | 66 | 66 | 66 | 66 | 66 |
| Hardness, Shore A | | | | | | | | | |
| | | | | | | | | | |
| Compression Set, cured 30min @ 160°C | 20 | 22 | 25 | 21 | 21 | 23 | 20 | 25 | 26 |
| 70hours @ 120°C, % | | | | | | | | | |
| | | | | | | | | | |
| Aged in Air, 70hours @ 120°C | 20.9 | 19.6 | 18.3 | 20.3 | 18.2 | 18.1 | 19.6 | 18.7 | 19.5 |
| Tensile, MPa | 280 | 260 | 230 | 250 | 250 | 230 | 230 | 240 | 250 |
| Elongation, % | 5.8 | 6.1 | 5.6 | 6.2 | 5.6 | 5.8 | 5.9 | 5.7 | 5.8 |
| 100% Modulus, MPa | 75 | 75 | 74 | 74 | 75 | 74 | 76 | 75 | 75 |
| Hardness, Shore A | 15 | 13 | -2 | 10 | -2 | -1 | 8 | 0 | 6 |
| Tensile Change, % | -35 | -40 | -52 | -44 | -50 | -51 | -42 | -51 | -47 |
| Elongation Change, % | 107 | 97 | 107 | 94 | 93 | 107 | 103 | 111 | 123 |
| 100% Modulus Change, % | 9 | 8 | 8 | 7 | 9 | 8 | 10 | 9 | 9 |
| Hardness Change, pts | | | | | | | | | |
| | | | | | | | | | |
| Mold Fouling, cured 2min @ 187°C (actual 200°C) | 2 | 0.5 | 0 | 1 | 0 | 0 | 0.5 | 0.5 | 0 |
| 10shots | 4 | 0.5 | 0 | 1 | 2 | 0 | 2 | 0 | 0 |
| 20shots | 5 | 0.5 | 0 | 2 | 2 | 0 | 3 | 0 | 0 |
| 30shots | 5 | 1 | 0 | 2 | 3 | 1 | 4 | 0 | 0 |
| 40shots | 5 | 1 | 0 | 2 | 3 | 1 | 5 | 0 | 1 |
| 50shots | | | | | | | | | |

## Claims

1. A method for inhibiting fouling of a mold by a composition in which an elastomer is being cured, which comprises adding at least 0.3 parts of a compound of the formula 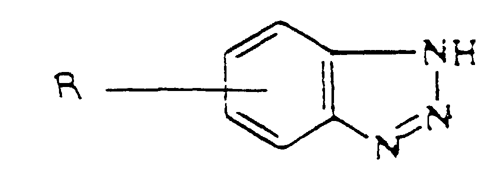 wherein R is hydrogen or lower alkyl or a salt thereof, per 100 parts of the elastomer in the composition prior to curing the elastomer in the mold.

2. A method according to claim 1, wherein the elastomer is cured by vulcanization with sulfur.

3. A method according to claim 1, wherein the elastomer is a nitrite rubber.

4. A method according to claim 3, wherein the nitrile rubber is a hydrogenated nitrile rubber.

5. A method according to claim 1, wherein the elastomer is cured by injection molding.

6. A method according to claim 5, wherein the elastomer is cured at a temperature of about 170-220°C.

7. A method according to claim 6, where the temperature of curing is about 190-200°C.

8. A method according to claim 1, wherein the benzotriazole compound is benzotriazole.

9. A method according to claim 1, wherein the benzotriazole compound is tolyltriazole.

10. A method according to claim 1, wherein the curable composition additionally contains a hydroxyquinoline.

11. A method according to claim 10, wherein the hydroquinoline is 8-hydroxyquinaldine.

12. A composition comprising a curable elastomer, a curing agent for the elastomer, and at least 0.3 parts of a benzotriazole of the formula 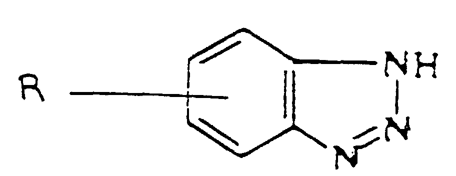 wherein R is H or lower alkyl, or a salt thereof, per 100 parts of the curable elastomer.

13. A curable composition according to claim 12, wherein the elastomer is a nitrile rubber.

14. A curable composition according to claim 13, wherein the nitrile rubber is a hydrogenated nitrile rubber.

15. A curable composition according to claim 12, wherein the benzotriazole compound is benzotriazole.

16. A curable composition according to claim 12. wherein the benzotriazole compound is tolyltriazole.

17. A curable composition according to claim 12, which additionally comprises a hydroxyquinoline.

18. A curable composition according to claim 17, wherein the hydroxyquinoline is 8-hydroxyquinaldine.

19. A composition according to claim 12, comprising 0.5-2.0 parts of the benzotriazole per 100 parts of the elastomer.
